# EUROPEAN PATENT APPLICATION

(11) **EP 1 038 448 A1**
(43) Date of publication of application: **27.09.2000**
(21) Application number: 00201011.4
(22) Date of filing: 20.03.2000
(51) Int. Cl.: A23L 1/18

(54) **Popcorn**

(30) Priority: 19.03.1999 NL 1011616
(71) Applicant: Sara Lee/DE N.V., 3532 AA Utrecht (NL)
(72) Inventor: Kramer, Birgitta Margaretha Maria, 1827 AT Tilburg (NL); Kreuning, Johannes, 1212 BC Hilversum (NL)
(74) Representative: Ottevangers, Sietse Ulbe

(57) **Abstract**

The present invention relates to a method for preparing popcorn, wherein corn is popped, and wherein a composition is added to the popped corn, which composition comprises water, salt and a carbohydrate. The invention further relates to popcorn obtainable by such method.

## Description

This invention relates to a method for preparing popcorn, and to popcorn obtainable by this method.

Different variants of popcorn are known. These variants can be subdivided into sweet and salt variants. In the past, the consumer purchased an amount of corn kernels and popped them himself to obtain popcorn. The popcorn was then flavored by adding sugar or salt, and optionally oil or butter, to obtain the desired variant.

While in the past the corn was popped in a pan on the gas cooker, nowadays unpopped flavored corn is for sale in a sealed package. This package can be placed directly in the microwave oven, so that the corn in the package is popped. A method for preparing such unpopped, flavored corn kernels is described inter alia in U.S. Patent 5,688,543.

However simple it is to prepare popcorn in the microwave, many consumers prefer to buy popcorn ready-to-eat, so that they do not have to take the trouble of popping corn themselves anymore. For that reason, ready-to-eat popcorn, in both sweet and salt variants, is offered to the consumer as well.

A disadvantage presenting itself in particular in the salt variant is that the popcorn is not experienced by the consumer as being sufficiently crisp or crunchy. Certainly when the popcorn has already been stored for some time, the popcorn becomes soft and limp, which does not yield the desired taste effect and mouthfeel upon consumption.

The object underlying the present invention is to provide a method for preparing a savory popcorn variant, for instance salt popcorn, which can be sold as ready-to-eat popcorn. The popcorn to be prepared needs to have a good taste and be sufficiently crisp. Additionally, it is desired that crispness be preserved for a long time.

The stated objects are achieved, according to the invention, by adding a specific composition to popped corn, which composition comprises water, salt and a carbohydrate. Accordingly, the invention concerns a method for preparing popcorn, in which corn is popped, and in which a composition is added to the popped corn, which composition comprises water, salt and a carbohydrate.

It has been found that the popcorn which is prepared according to the present invention has a very good taste. Even after prolonged storage, the popcorn is so crisp as to be virtually indistinguishable from freshly prepared popcorn.

As stated, according to the invention, first corn is popped. All types of corn from which popcorn is commonly prepared can be used in the present method, such as corn of the mushroom type or the butterfly type. Preferably, corn of the mushroom type is popped.

Popping the corn can be done in any conventional manner, for instance using a continuous dry popper provided with a fluidized bed, or by wet popping, in which the corn, using hot oil, is popped with continuous stirring. Preferably, the corn is popped by dry popping at elevated temperature, more preferably at a temperature of 200 to 250°C. Particularly good results are obtained when the corn is popped at a temperature of 215-230°C.

An important aspect of the invention is that to the popped corn a specific composition is added. This composition is separately prepared before it is added to the popped corn. To that end, the different constituents of the composition are properly mixed. Preferably, the constituents are mixed at elevated temperature, more preferably at a temperature of 60-150°C. Very good results are achieved when the constituents are mixed at a temperature of 80-100°C. It has been found that heating during mixing leads to a more homogeneous and better processable composition.

The composition comprises water, salt and a carbohydrate. Optionally, the composition can comprise other conventional constituents, such as a flavor, aroma, or color, an emulsifier or a preservative. Also, it is possible to include pieces of other foodstuffs in the composition. Examples are pieces of nut, for instance pieces of peanut, pieces of vegetable, sesame seed, rice flakes, bread crumbs and herbs.

The salt that is included in the composition serves to give the popcorn the desired salt taste. In principle, any salt that is considered acceptable in food technology to give foods a salt taste is eligible for this purpose. Examples of suitable salts are sodium chloride, potassium chloride and combinations thereof. Preferably, sodium chloride is used.

As carbohydrate, in principle any carbohydrate can be used. The term carbohydrate in the context of the invention is understood to mean any organic compound which is made up of carbon atoms, hydrogen atoms and oxygen atoms, with the ratio between the numbers of hydrogen and oxygen atoms being substantially equal to that in water. Thus both mono-, oligo- and polysaccharides are encompassed by the term carbohydrates. It will be clear that small chemical modifications of natural carbohydrates whereby the ratio referred to is disturbed to a small extent, or whereby small numbers of heteroatoms are introduced, are allowed, provided that the desired properties of the natural carbohydrates are substantially not adversely affected.

It is preferred to use a carbohydrate which is water-soluble. Preferably, the carbohydrate in water substantially does not give rise to agglomeration or gelling either at room temperature or upon heating. It will be clear that only those carbohydrates are used that are considered acceptable in foods. Examples of suitable carbohydrates are maltodextrin, inulin, sugar alcohols, modified starches and combinations thereof. It is also possible to use a composite product which contains the desired amount of carbohydrate. An example of such a composite product is whey powder which consists for a large part of lactose.

According to a preferred embodiment of the invention, a non-sweet tasting carbohydrate is used. This is understood to mean a carbohydrate which substantially does not impart any sweet taste to the popcorn when the composition comprising the non-sweet tasting carbohydrate has been added to the popped corn. It will be clear that all this depends not only on the nature of the carbohydrate, but also on the added amount of carbohydrate relative to the amount of salt present and any other flavorants.

Carbohydrates having a dextrose equivalent of 1 to 35 are considered to be non-sweet tasting. Preferably, a carbohydrate is used with a dextrose equivalent of from 10 to 20. A definition of the term dextrose equivalent (DE) is to be found inter alia in Analytical Procedures Committee, Reducing Sugars, Standard Analytical Methods of the Member Companies of the Corn Industries Research Foundation, 6^{th} edition, Corn Refiners Association, Inc., Washington D.C., revision 1980, D-52. The term dextrose equivalent is an indication of the total reducing value of a carbohydrate, calculated as dextrose and expressed as a percentage of total dry substances. In other words, dextrose has a DE of 100 and maltose has a DE of 50. A molecule of hydrolyzed amylose or amylopectin containing 100 anhydroglucose units would contain 1 reducing end group and would thus have a DE of 1.

Particularly good results are achieved when a maltodextrin having a dextrose equivalent of 10-20 is used as carbohydrate. It has been found that with it a crisp popcorn of a very good taste can be prepared.

To achieve good results regarding taste and crispness, the amount of the non-sweet tasting carbohydrate in the composition will preferably be between 40 and 95% by weight, more preferably between 60 and 80% by weight, based on the weight of the composition. The amount of salt in the composition will depend on the desired salt taste of the popcorn. That desired taste is achieved when the salt content of the eventual product is 1-10% by weight, preferably 1.5-5% by weight, based on the weight of the popcorn. To that effect, the amount of salt in the composition to be added will typically be between 2 and 20% by weight, based on the weight of the composition. Any other additives present will be used in an amount such that they are present in the popcorn to be prepared in their conventional amounts. The balance of the composition consists of water.

The above-described composition is preferably chosen such as to have a suitable viscosity under the conditions under which it is added to the popped corn. It is important that the composition be sufficiently fluid (pourable and/or atomizable), so that it can be suitably distributed over the popped corn. At too high a viscosity, a disadvantageously large amount of energy is required to distribute the composition homogeneously over the popped corn. Thus the composition preferably has a low viscosity at a high dry matter content. The dry matter content is preferably between 35 and 85% by weight, more preferably between 45 and 65% by weight.

Factors that play a role in setting the viscosity are *inter alia* the nature and concentration of the carbohydrate in the composition and the temperature at which the composition is added. The artisan will be able, on the basis of what has been stated above and his ordinary skill in the art, to formulate the composition such that a suitable viscosity is achieved.

According to the invention, the separately prepared composition is added to the popped corn. This is done with continuous, proper mixing, so that the composition is homogeneously distributed over the popcorn. An optimum crisp result is achieved when the composition constitutes a, preferably partial, coating on the popped corn. To that end, the composition is preferably atomized with an air atomizer. The (air) pressure at which atomization is done is not critical and can be adjusted to the fluid pressure and the shape and size of the nozzle of the atomizer, but will typically be between 2 and 5 bar.

Preferably, the composition is added shortly after the corn is popped, so that the popped corn is still warm. The temperature of the composition during addition is preferably between 60 and 150°C, more preferably between 80 and 100°C. What is thereby achieved is that the composition can be suitably distributed homogeneously over the popcorn. The amount of composition that is added to the popcorn is preferably between 20 and 500% by weight, more preferably between 50 and 250% by weight, based on the weight of the popcorn.

After or during the addition of the composition to the popped corn, optionally oil, butter, additional salt and/or lecithin can be added. These substances can, on the one hand, positively influence the taste of the popcorn and, on the other, prevent the popcorn from sticking together. These substances will also be added with continuous mixing. The amounts in which these substances are employed will preferably be between 5 and 15% by weight, based on the combined weight of the popped corn and the added composition.

Before the thus prepared popcorn is packaged to be offered to the consumer, it can be dried in air and be cooled. This latter step serves to provide that the eventual product has a desired moisture content. The moisture content of the prepared popcorn is preferably between 1 and 5% by weight or still lower, more preferably between 1 and 3% by weight, based on the weight of the popcorn. The artisan will be able, on the basis of his skill, to select suitable ways of drying and cooling.

The invention will presently be further elucidated in and by the following example, which is not to be construed as being limiting.

### Example

In a continuous dry popper, corn of the mushroom type was popped at a temperature of 220°C. The popped corn was divided into four batches.

Separately, four syrups were prepared, the compositions of which are summarized in the table below. To that end, the desired ingredients were mixed at a temperature of 100°C. For pumping the syrups, use was made of a positive displacement pump of the type Netsch SP-1 (obtainable from Wijk en Boerma pompen, Netherlands).

The syrups were each added to a different batch of popped corn with continuous mixing at a temperature of 100°C. For spraying the syrups onto the popped corn, use was made of an air atomizer type 10535-1/4JCO-SS-20 with flat jet sprayer of the type SUE18A-SS (obtainable from SprayingSystems Netherlands). The fluid pressure was 1-4 bars; the air pressure 1-3 bars. Simultaneously, in each case 25 grams of sunflower oil were added. The relative amounts of popped corn and syrup are also summarized in Table 1.

**Table 1**

| recipes of prepared syrups, and ratio to popped corn | | | | |
|---|---|---|---|---|
| **Raw material** | **Recipe 1** | **Recipe 2** | **Recipe 3** | **Recipe 4** |
| Syrup | | | | |
| water | 25.0 kilograms | 25.0 kilograms | 25.0 kilograms | 25.0 kilograms |
| Corn dextrine* | 25.0 kilograms | 25.0 kilograms | 25.0 kilograms | 25.0 kilograms |
| Salt (NaCl) | 2.5 kilograms | 4.0 kilograms | 2.5 kilograms | 3.5 kilograms |
| Flavor ** | | | 2.5 kilograms | |
| Color*** | | | | 0.25 kilograms |
| | | | | |

| Total | | | | |
|---|---|---|---|---|
| Popped corn | 2.5 kilograms | 2.5 kilograms | 2.0 kilograms | 2.5 kilograms |
| Syrup | 2.5 kilograms | 2.5 kilograms | 2.5 kilograms | 2.5 kilograms |
| | | | | |

| | | | | |
|---|---|---|---|---|
| *Glucidex 19 (dextrose equivalent 19) obtainable from Barentz | | | | |
| **QL 21878 (Broth) obtainable from Quest. | | | | |
| ***Sunset Yellow art.no. 28812 obtainable from Warner Jenkinson (E-110). | | | | |

Finally, the popcorn was post-dried with hot air and cooled. In each instance, tests with a test panel showed that a product of good taste had been obtained which, as regards crispness, strongly resembled sweet popcorn. After the popcorn had been stored for two weeks, the crispness was found not to have deteriorated, or hardly so.

## Claims

1. A method for preparing savory popcorn, wherein corn is popped, and wherein a composition is added to the popped corn, which composition comprises water, salt and a carbohydrate.

2. A method according to claim 1, wherein the carbohydrate has a dextrose equivalent between 1 and 35.

3. A method according to any one of the preceding claims, wherein the carbohydrate is selected from maltodextrin, inulin, sugar alcohols, lactose, and combinations thereof.

4. A method according to any one of the preceding claims, wherein the corn is popped at a temperature of 200-250°C, preferably of 215-230°C.

5. A method according to any one of the preceding claims, wherein the composition is heated prior to addition to the popped corn.

6. A method according to claim 5, wherein the composition has a temperature of 60-150°C.

7. A method according to any one of the preceding claims, wherein the composition further comprises an aroma, color, flavor and/or other conventional additive for popcorn.

8. A method according to any one of the preceding claims, wherein oil, butter, salt and/or lecithin is added to the popcorn.

9. A method according to any one of the preceding claims, wherein the composition comprises 2-20% by weight of salt, 40-95% by weight of the carbohydrate, and the balance water.

10. A method according to any one of the preceding claims, wherein the popcorn is dried to a moisture content between 1 and 5% by weight, based on the weight of the popcorn, or still lower.

11. Popcorn obtainable in a method according to any one of the preceding claims.

12. Savory popcorn provided with a coating which comprises a carbohydrate.

13. Popcorn according to claim 11 or 12 with a salt content between 1 and 10% by weight, based on the weight of the popcorn.

14. Use of a carbohydrate for imparting crispness to savory popcorn.
